# EUROPÄISCHE PATENTSCHRIFT

(11) **EP 0 670 943 B1**
(45) Veröffentlichungstag und Bekanntmachung des Hinweises auf die Patenterteilung: **08.01.1997**
(21) Anmeldenummer: 94916819.9
(22) Anmeldetag: 25.11.1993
(51) Int. Cl.: E04F 13/08, E04G 23/02, F16B 19/00

(54) **VERFAHREN UND ANORDNUNG ZUR BEFESTIGUNG VON FASSADENPLATTEN**
PROCESS AND ARRANGEMENT FOR SECURING FACADE SLABS
PROCEDE ET AGENCEMENT POUR LA FIXATION DE PLAQUES DE FACADE

(30) Priorität: 27.11.1992 DE 4239883; 27.11.1992 DE 4239629; 02.07.1993 DE 4322089
(43) Veröffentlichungstag der Anmeldung: 13.09.1995
(73) Patentinhaber: KELLNER, Peter, D-36214 Nentershausen-Süss (DE)
(72) Erfinder: KELLNER, Peter, D-36214 Nentershausen-Süss (DE); RIMBACH, Frank, D-36214 Nentershausen-Süss (DE)
(74) Vertreter: Liedtke, Klaus, Dr.
(86) Internationale Anmeldenummer: DE9301115
(87) Internationale Veröffentlichungsnummer: WO9412742

(56) Entgegenhaltungen:
- EP-A- 0 086 452
- DE-A- 2 714 503
- DE-A- 2 803 709
- DE-U- 9 216 965
- FR-A- 1 340 012
- GB-A- 811 993
- GB-A- 2 148 969

## Beschreibung

Die Erfindung betrifft ein Verfahren und eine Anordnung zur Befestigung von Fassadenplatten an Plattenbauwerken, die sich vor einer Isolierschicht an Bauwerksplatten befinden.

An Plattenbauwerken besteht infolge von Korrosionserscheinungen an den Stahlbauteilen, die zur Befestigung von Fassadenplatten an diesen Plattenbauwerken verwendet werden, die Gefahr daß die Fassadenplatten nicht mehr sicher gehalten werden oder sogar abstürzen.
Im Stand der Technik sind verschiedene Möglichkeiten bekannt, derartige Fassadenplatten nachträglich zu sichern. Es ist beispielsweise üblich, durch die Fassadenplatten Bohrungen mit relativ großem Durchmesser anzubringen, in welche Befestigungselemente eingebracht werden.
Nachteilig ist hierbei, daß zur Herstellung dieser Bohrungen Bohrvorrichtungen benötigt werden, die zunächst wiederum an den zu sichernden Fassadenplatten befestigt werden müssen. Diese Bohrvorrichtungen müssen mit zusätzlichen Befestigungsteilen an der Fasadenplatte angeschraubt werden, was einen sehr hohen Aufwand erfordert und die Platten zusätzlich beansprucht. Dadurch werden diese Platten beschädigt und es besteht die Gefahr, daß sich die Platten lösen und abstürzen.

Nach dem Stand der Technik ist es weiterhin bekannt, gefährdete Fassadenplatten dadurch zu befestigen, daß mittels Schlagbohrmaschinen Bohrungen in die zu befestigende Fassadenplatte und die Bauwerksplatte angebracht werden. Danach werden in die Bauwerksplatte Dübel eingesetzt und in dem der Isolierung dienenden Zwischenraum Chemikalien, beispielsweise Zweikomponentenkleber oder ähnliches, eingebracht. Anschließend werden die Platten mittels Schrauben miteinander verbunden.
Nachteilig bei diesem Verfahren ist, daß die durchbohrte Fassadenplatte beschädigt wird, da infolge der zusätzlichen Erschütterungen durch das Schlagbohren, insbesondere beim Durchstoßen der Fassadenplatte Bruchstücke von der Fassadenplatte abgeschlagen werden. Damit ergeben sich erhöhte Beanspruchungen für diese Platten und damit auch eine hohe Gefährdung. Ein weiterer Nachteil ist der umweltgefährdende Einsatz der Chemikalien. Bei diesem Verfahren ist außerdem ungünstig, daß eine große Anzahl von Befestigungselementen für jede Platte erforderlich ist und daß diese Befestigungselemente am Bauwerk sichtbar sind.

Nach DE-OS 28 03 709 ist eine Befestigung von Fassadenplatten an Bauwerken bekannt, bei der die Verbindung mit in Bohrungen des Bauwerks befestigbaren und an den Fassadenplatten angebrachten Stehbolzen erfolgt, die in Art eines Spanndübels hohl und von der dem Bauwerk abgewandten Seite her offen ausgebildet sind und die zur Aufnahme eines den Abmessungen des Hohlraumes angepaßten Sprengdornes dienen.
Nach GB - A - 2 148 969 ist eine Anordnung zur Befestigung einer hängend angeordneten Verkleidung an einer Wand bekannt, bei der die Befestigung durch schräg angeordete Schrauben erfolgt.

Nachteilig ist bei diesen Anordnungen ist, daß die Standsicherheit durch reine Spreizkräfte abgeleitet werden, was zur Folge hat, daß diese Systeme nur für leichte Fassadenelemente einsetzbar sind.

Aufgabe der Erfindung ist es, ein Verfahren und eine Anordnung zur Befestigung von Fassadenplatten an Bauwerken und eine Vorrichtung zur Ausführung des Verfahrens anzugeben, mit denen eine sichere und kostengünstige Befestigung auch schwerer Platten ermöglicht wird und zusätzliche Belastungen der zu befestigenden Platten und des Bauwerkes weitgehend vermieden werden.

Erfindungsgemäß gelingt die Lösung dieser Aufgabe durch ein Verfahren mit den in den Ansprüchen 1 und 2 angegeben Merkmalen.

Die Anwendung des erfindungsgemäßen Verfahrens gewährleistet ein erschütterungsfreies Bohren und ermöglicht eine sichere Befestigung bei minimaler Beanspruchung der zu verbindenden Platten. Insbesondere durch die Verwendung einer geschlitzten Hülse und eines konusförmigen Metallteiles wird eine exakte und spielfreie Befestigung gewährleistet.

Die schräge Anordnung der Befestigungseinrichtung bewirkt, daß jeder Zwang auf die Platten durch die Befestigung vermieden wird. Falls die Platten nur durch die erfindungsgemäße Anordnungen gehalten werden, tritt ein selbsttätiges gegenseitiges Anziehen der Platten ein, was zur Erhöhung der Befestigungssicherheit beiträgt.

Ferner ist es möglich, daß das konische Metallteil vor dem Einbringen in die geschlitzte Hülse abgekühlt wird. Damit wird ein weiteres Aufspreizen der geschlitzten Hülse bewirkt und eine erhöhte Befestigungssicherheit erreicht.

Die erfindungsgemäße Anordnung weist die in den Anspüchen 3 bis 7 angegebene Merkmale auf.

Ein wesentlicher Vorteil der erfindungsgemäßen Anordnung ist, daß nur das Eigengewicht der Fassade über Biegekräfte aufgenommen wird und angreifende Windlasten wegen der Schrägstellung der Befestigungselemente in vertikaler Richtung zuerst das Eigengewicht der Fassade aus Beton überwinden müssen. Die erfindungsgemäße Anordnung ist deshalb auch zur nachträglichen Sicherung schwerer Fassadenplatten aus Beton gut geeignet.

Die erfindungsgemäße Anordnung ermöglicht es, auch bei größeren Bohrungstoleranzen und bei unterschiedlichen Bohrungen in der Bauwerksplatte und in der Fassadenplatte einen sicheren Sitz zu gewährleisten.

Ein wesentlicher Vorteil der erfindungsgemäßen Anordnung ist, daß aufwendige Arbeitsgänge, wie dies bei der Montage der nach dem Stand der Technik bekannten Anordnungen erforderlich sind entfallen. Dies betrifft das Ausrichten der Platten und deren aufwendige Befestigungen durch Schrauben. Die erfindungsgemäße Anordnung kann mit geringstem Arbeitsaufwand montiert werden und gewährleistet trotzdem eine hohe Sicherheit.

Ferner ist es möglich, daß die verbleibende Öffnung durch ein zusätzliches Verschlußelement abgedichtet wird. Dabei kann die verbleibende Öffnung durch Mörtel oder dergleichen verschlossen oder gesonderte Verschlußbauteile eingesetzt werden.
Als Vorteil ergibt sich dabei, daß nach der Sanierungsmaßnahme keine sichtbaren Befestigungselemente vorhanden sind, die das Fassadenbild beeinträchtigen. Das erfindungsgemäße Verfahren läßt sich deshalb vorteilhaft auch in solchen Fällen verwenden, in denen nur die Sicherung der vorhandenen Fassadenplatten bezweckt wird und keine neuen Fassadenelemente angebracht werden sollen.

Zweckmäßigerweise bestehen die geschlitzte Hülse und das konusförmige Metallteil aus einem korrossionsfesten Material, vorzugsweise aus Edelstahl. Es ist auch möglich, die geschlitzte Hülse aus zwei Teilen anzufertigen wobei die inneren Hülse aus Metall und die äußere Hülse vorzugsweise aus Kunststoff besteht.

Die Erfindung wird im folgenden anhand eines Ausführungsbeispieles näher erläutert. In der zugehörigen Zeichnung zeigen:
Figur 1 eine Teilansicht durch ein Plattenbauwerk im Horizontalschnitt, bei dem die Platten nach dem erfindungsgemäßen Verfahren gesichert wurden,
Figur 2 eine Seitenansicht der geschlitzten Hülse,
Figur 3 die Seitenansicht des konusförmigen Teiles,
Figur 4 die Seitenansicht eines konusförmigen Teiles, das als Doppelkonus ausgebildet ist
Figur 5 die erfindungsgemäße Anordnung mit Doppelkonus und Zusatzhülse in Explosivdarstellung und
Figur 6 die erfindungsgemäße Anordnung mit Doppelkonus und Zusatzhülse im montiertem Zustand.

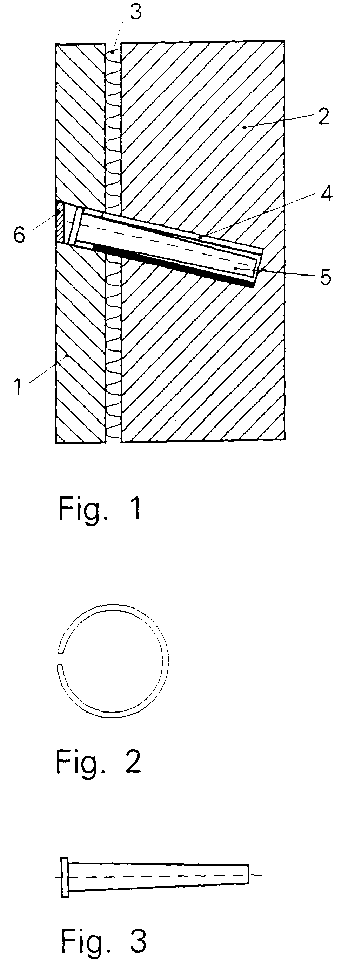

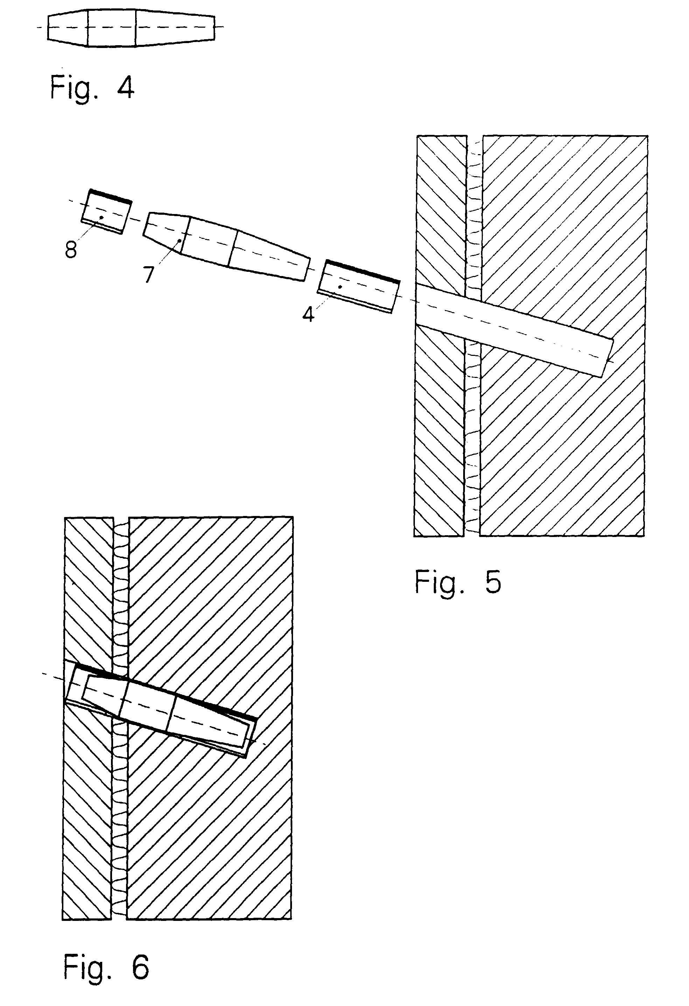

Figur 1 zeigt die Befestigung der Platten nach dem erfindungsgemäßen Verfahren. Die Fassadenplatte 1 ist an der Bauwerksplatte 2 befestigt. Zwischen den beiden Platten befindet sich eine Isolierung 3. Nachdem eine schräge Bohrung durch die Fassadenplatte 1 und in die Bauwerksplatte angebracht wurde, wird die geschlitzte Hülse 4 in die Bohrung geschoben und danach das konusförmige Metallteil 5 mit wenigen Hammerschlägen eingetrieben. Dadurch weitet sich die geschlitzte Hülse 4 auf und gewährleistet einen festen Sitz in der Bohrung und damit die sichere Verbindung der beiden Platten. Anschließend wird die verbleibende Öffnung mit dem Verschlußelement 6 abgedichtet.
Die in den Figuren 5 und 6 dargestellte Ausführungsform verwendet ein konusförmiges Metallteil, an dem ein Doppelkonus angebracht ist. Bei der Montage dieser Anordnung wird nach dem Herstellen der Bohrung zunächst die hintere geschlitzte Buchse 4 eingefügt. Die Länge der geschlitzten Buchse 4 entspricht hierbei etwa der Tiefe der in die Bauwerksplatte 1 eingearbeiteten Bohrung. Anschließend wird der Doppelkonus 7 eingebracht und mit einem Hammerschlag befestigt. Auf den Doppelkonus 7 wird die geschlitzte Zusatzhülse 8 aufgesteckt. Durch einen weiteren Hammerschlag auf diese Zusatzhülse ist die sichere Befestigung der gesamten Anordnung gewährleistet.

## Patentansprüche

1. Verfahren zur Befestigung von Fassadenplatten an Plattenbauwerken, die sich vor einer Isolierschicht an Bauwerksplatten befinden, durch Einsetzen eines konusförmigen Metallteiles, **gekennzeichnet durch** folgende Verfahrensschritte:
- Erzeugen einer Kernbohrung durch Durchbohren von Fassadenplatte (1), Isolierung (3) und Bauwerksplatte (2), wobei die Bohrung in der Fassadenplatte (1) als Durchgangsbohrung und in der Bauwerksplatte (2) als Grundbohrung in einem Arbeitsgang und unter einer Neigung gegenüber den Fassadenplatten (1) ausgeführt wird, wobei die Neigung so gerichtet ist, daß sich die Bohrungsachse in der Fassadenplatte oberhalb der Bohrungsachse in der Bauwerksplatte befindet und
- Einsetzen einer geschlitzten Metallhülse (4) in diese Bohrung.

2. Verfahren nach Anspruch 1, **dadurch gekennzeichnet, daß** die Bohrung mit einem Neigungswinkel im Bereich von 0° bis 30° ausgeführt wird.

3. Anordnung zur Befestigung von Fassadenplatten an Plattenbauwerken, die sich vor einer Isolierschicht an Bauwerksplatten befinden, bei der sich in einer Kernbohrung, die in der Fassadenplatte (1) als Durchgangsbohrung und in der Bauwerksplatte (2) als Grundbohrung ausgebildet ist, ein konusförmiges Metallteil (5) befindet, **dadurch gekennzeichnet, daß** die Kernbohrung unter einer nach oben gerichteten Neigung gegenüber den Fassadenplatten (1) angebracht ist, wobei die Neigung so gerichtet ist, daß sich die Bohrungsachse in der Fassadenplatte oberhalb der Bohrungsachse in der Bauwerksplatte befindet und
das konusförmige Metallteil (5) in einer geschlitzten zylindrische Metallhülse (4) angeordnet ist.

4. Anordnung nach Anspruch 3, **dadurch gekennzeichnet, daß**
- das konusförmige Metallteil (5) als Doppelkonus ausgebildet ist,
- die geschlitzte Hülse (4) sich im Bereich von Bauwerksplatte (2) und Isolierung (3) befindet und
- im Bereich der Fassadenplatte eine geschlitzte Zusatzhülse (7) angeordnet ist.

5. Anordnung nach Anspruch 3 oder 4, **dadurch gekennzeichnet, daß** die verbleibende Öffnung durch ein Verschlußelement (6) abgedichtet ist.

6. Anordnung nach einem der Ansprüche 3 bis 5, **dadurch gekennzeichnet, daß** die geschlitzte Hülse (4) und das konusförmige Metallteil (5) aus Edelstahl bestehen.

7. Anordnung nach einem der Ansprüche 4 bis 6, dadurch gekennzeichnet, daß die geschlitzte Zusatzhülse (7) aus Kunststoff besteht.

## Claims

1. Method for the affixation of facade slabs to slab structures, which are disposed before an insulating layer on structural slabs, through use of a conical metal part, **wherein** there are the following process steps:
- execution of a core drill-hole by drilling through facade slab (1), insulation (3) and structural slab (2), whereby the drill-hole in facade slab (1) is executed as a through drill-hole and in structural slab (2) as foundation drill-hole in one workstep and at an inclination vis-à-vis facade slabs (1), whereby the inclination is aligned in such a way that the drilling axis in the facade slab is situated above the drilling axis in the structural slab and
- insertion of a slotted metal sleeve (4) in said drill-hole.

2. Method according to claim 1, **wherein** said drill-hole is executed at an angle of inclination in the range of 0° to 30°.

3. Arrangement for the affixation of facade slabs to slab structures, which are disposed before an insulating layer, in which in a core drill-hole, which is executed in facade slab (1) as a through drill-hole and in structural slab (2) as foundation drill-hole, a conical metal part (5) is disposed, **wherein** said core hole is effected at an upwards aligned inclination vis-à-vis said facade slabs (1), whereby the inclination is aligned in such a way that the drilling axis in the facade slab is situated above the drilling axis in the structural slab and said conical metal part (5) is disposed in said slotted cylindrical metal sleeve (4).

4. Arrangement according to claim 3, **wherein**
- said conical metal part (5) is executed as a double cone,
- said slotted sleeve is located in the region of said structural slab (2) and insulation (3) and
- in the region of said facade slab a slotted additional sleeve (7) is disposed.

5. Arrangement according to claim 3 or 4, **wherein** the remaining opening is sealed by means of a cover element (6).

6. Arrangement according to one of claims 3 to 5, **wherein** said slotted sleeve (4) and said conical metal part (5) consist of stainless steel.

7. Arrangement according to one of claims 4 to 6, **wherein** said slotted additional sleeve (7) consists of plastic.

## Revendications

1. Procédé d'ancrage de panneaux de façade sur des ouvrages en préfabriqué, venant s'appliquer sur une couche isolante couvrant les dalles de l'ouvrage, par insertion d'une pièce métallique de forme conique, caractérisé par les opérations suivantes:
- Exécution de carottage par perçage du panneau de façade (1), de l'isolation (3) et de la dalle d'ouvrage (2), à savoir que dans le panneau de façade (1), le trou est foré débouchant et dans la dalle d'ouvrage (2) borgne, en une seule passe et sous une inclinaison par rapport aux panneaux de façade (1), étant entendu que l'inclinaison est telle que l'axe du trou dans le panneau de façade est situé au-dessus de l'axe du trou dans la dalle de l'ouvrage et
- Insertion dans ce trou d'une douille métallique fendue (4).

2. Procédé selon la revendication 1, caractérisé en ceci que le trou est percé sous un angle d'inclinaison compris dans un secteur de 0° à 30°.

3. Disposition en vue de l'ancrage de panneaux de façade sur des ouvrages en préfabriqué, venant s'appliquer sur une couche isolante couvrant les dalles d'ouvrage, dans laquelle un carottage pratiqué en trou débouchant dans le panneau de façade (1) et en trou borgne dans la dalle d'ouvrage (2), reçoit une pièce métallique (5) de forme conique, caractérisée en ceci que le carottage est pratiqué sous une inclinaison dirigée vers le haut par rapport aux panneaux de façade (1), à savoir que l'inclinaison est orientée de façon que l'axe du trou dans la panneau de façade se situe au-dessus de l'axe du trou dans la dalle de l'ouvrage et que la pièce métallique de forme conique (5) prend place dans une douille métallique cylindrique (4) fendue.

4. Disposition selon la revendication 3, caractérisée en ceci que
- la pièce métallique de forme conique (5) est conçue en double cône,
- la douille fendue (4) est logée dans la zone de la dalle d'ouvrage (2) et de l'isolation (3) et
- qu'une douille fendue additionnelle (7) est logée au niveau du panneau de façade.

5. Disposition selon la revendication 3 ou 4, caractérisée en ceci que l'orifice restant est bouché par un élément d'obturation (6).

6. Disposition selon l'une des revendications 3 à 5, caractérisée en ceci que la douille fendue (4) et la pièce métallique de forme conique (5) sont en acier fin.

7. Disposition selon l'une des revendications 4 à 6, caractérisée en ceci que la douille fendue additionnelle (7) est en matière plastique.
